# EUROPÄISCHE PATENTSCHRIFT

(11) **EP 0 645 655 B1**
(45) Veröffentlichungstag und Bekanntmachung des Hinweises auf die Patenterteilung: **04.10.2001**
(21) Anmeldenummer: 94108836.1
(22) Anmeldetag: 09.06.1994
(51) Int. Cl.: G02B 6/44

(54) **Wickelkassette**
Winding Cassette
Cassette d'enroulement

(30) Priorität: 29.09.1993 DE 4333719; 31.01.1994 DE 9401771 U
(43) Veröffentlichungstag der Anmeldung: 29.03.1995
(73) Patentinhaber: KRONE GmbH, 14167 Berlin (DE)
(72) Erfinder: Stachulla, Peter, D-13595 Berlin (DE)

(56) Entgegenhaltungen:
- EP-A- 0 557 188
- DE-A- 4 107 228
- DE-C- 3 717 028
- DE-U- 9 010 395
- GB-A- 2 256 286
- PATENT ABSTRACTS OF JAPAN vol. 7, no. 260 (P-237) 18. November 1983 & JP-A-58 143 308 (NIPPON DENSHIN DENWA KOSHA) 25. August 1983

## Beschreibung

Die Erfindung bezieht sich auf eine Wickelkassette entsprechend dem Oberbegriff des Anspruches 1.

Eine Wickelkassette der gattungsgemäßen Art ist aus dem Prospekt "Kassettengehäuse zur Handhabung von gespleißten Glasfasern", Ausgabe 7.1993, der KRONE AG vorbekannt. Die Ränder und die Umlenkelemente bilden dabei eine Wickelnut, in der Kabel zur Aufnahme der Überlängen verlegt werden können. Beim Einwickeln der Kabel legt sich die erste Schlaufe durch ihre Eigenspannung an die äußeren Ränder und die innen liegenden Umlenkelemente an, wobei die Niederhalter das Kabel gegen ein Herausfallen sichern. Die folgende zweite Schlaufe legt sich wieder außen an die Ränder und innen an die Umlenkelemente an. Die Kabelentnahme ist nur in einer umgekehrten Reihenfolge zum Einwickeln möglich. Nachteilig ist ferner, daß die auf der Trägerplatte starr angeordneten kreisbogenförmigen Umlenkelemente eine für viele Zwecke nur unzureichende Überlänge von Kabeln aufzunehmen erlauben.

Aus der DE-A-41 07 228 ist eine Lichtwellenleiter-Spleißbox zur Aufnahme von mehreren Spleißkassetten vorbekannt, die nebeneinander und übereinander in der Spleißbox angeordnet sind. Auf der Trägerplatte der Spleißbox sind Kabelklemmen vorgesehen, in denen entweder Lichtwellenleiter-Faserbündel oder Lichtwellenleite-Einzelfasern eingeklemmt werden. Diese Kabelklemmen sind parallel zu den Längsseiten der Spleißkassette bzw. parallel zu den Schmalseiten der Spleißbox angeordent. Die Kabelklemmen dienen dazu, daß die Überlängen der Lichtwellenleiter nicht lose und ungeordnet in der Spleißbox liegen. Nachteilig ist, daß bei mehreren übereinander und nebeneinader angeordneten Spleißkassetten die Verlegewege der Überlängen ungeordent und unübersichtlich sind. Beim Herausnehmen der Speißkassetten ist daher ein Sortieren und Ordnen der überkreuzten Überlängen notwendig.

Aus der EP-A-0557188 ist eine Spleißkassette mit Speißaufnahmen bekannt. Die Spleißkassette zeigt Niederhalter mit nach innen ragenden Halterippen. Nachteilig ist, daß die Lichtwellenleiter übereinander auf sich kreuzenden Verlegewegen angeordnet sind.

Aus US-A-4 840 449 und Druckschrift: "Kassettengehäuse zur Haudhabung von gespleißten Glasfasern" Ausgabe 7 1993, Seite 74, KRONE AG sind andere Spleißkassetten bekannt.

Der Erfindung liegt von daher die Aufgabe zugrunde, eine Wickelkassette der gattungsgemäßen Art dahingehend zu verbessern, daß die Aufnahme einer für den vorhandenen Aufnahmeraum maximalen Überlängengröße ermöglicht wird.

Zur Lösung dieser Aufgabe sieht die Erfindung vor, daß im Raum vor dem Spleißkassetten-Eingang Führungselemente angeordnet sind, welche unter Beachtung der Mindestbiegeradien der Kabel die Aufnahme von mindestens dem Eineinhalbfachen der um die Spleißkassette herumgeführten Kabellänge gewährleisten. Die variable Führung der Kabel entsprechend den Erfordernissen wird durch die steckbare Ausbildung der Führungselemente erreicht. Im Bereich vor dem Spleißkassetten-Eingang ist die Trägerplatte der Wickelkassette dazu mit einem entsprechenden Raster versehen. Es wird dadurch möglich, in dem zur Verfügung stehenden Raum, der durch die genormten Abmessungen des Wickelkassettengehäuses und durch die festgelegte Anordnung der Spleißkassette in der Wickelkassette definiert ist, eine auf die Anwendung bezogene optimierte Kabelführung vorzunehmen. Es wird erreicht, daß die vom Anwender geforderte Mindestgröße der Überlänge im Raum vor dem Spleißkassetten-Eingang in Ergänzung zu der bereits üblichen Kabelführung um die Spleißkassette herum realisiert wird. Die Führungselemente können so angeordnet sein, daß die Kabel wahlweise mäanderförmig, spiralförmig, schlaufenförmig, konzentrisch oder auch in Form von Achten geführt werden, wobei die Kabel beliebig übereinander- oder nebeneinander angeordnet sein können. Die Art der Kabelführung kann z.B. von den Kabelabmessungen abhängig gemacht werden.

Gemäß Anspruch 1 sind in vorteilhafter Weise mehrere kurvenförmige Umlenkelemente räumlich versetzt auf Kreisbögen unterschiedlicher Radien angeordnet. Die Umlenkelemente bilden mehrere getrennte Verlegewege in den jeweiligen Bereichen, wodurch keine Kreuzungsstellen entstehen. Die erste Schlaufe des Kabels beginnt an der Öffnung der Wickelkassette. Das Kabel legt sich durch seine Eigenspannung an den schmalseitigen Rand außen an und wird in die außenliegenden Umlenkelemente eingelegt. Die Niederhalter sichern dabei das Kabel gegen ein Herausfallen. Die zweite Schlaufe wird anschließend von außen kommend in den inneren Bereich eingelegt. Das Kabel wird dabei innenseitig auf die Ränder gelegt und durch die innenliegenden Umlenkelemente geführt, wobei Kreuzungsstellen vermieden werden.

In bevorzugter Weise sind die kreisbogenförmigen Umlenkelemente zumindest an einer Schmalseite der Wickelkassette auf konzentrischen Kreisen unterschiedlicher Radien angeordnet.

Gemäß Anspruch 4 sieht die Erfindung des weiteren vor, daß Führungselemente unterschiedlicher Geometrie in der Wickelkassette positioniert werden und dadurch für die Kabel getrennte Verlegewege ohne Kreuzungsstellen entstehen, wobei die Kabel in definierten Schlaufen mit eigenen Wickelnuten geführt werden. In bevorzugter Weise werden die Führungselemente an Stellen, an denen auf das Kabel Kräfte zum Kassetteninneren wirken, räumlich voneinander getrennt für getrennte Verlegewege der Kabel angeordnet. An Stellen, an denen auf das Kabel nach außen gerichtete Kräfte wirken, werden gemeinsame Führungselemente für einen gemeinsamen, parallelen Verlegeweg der Kabel positioniert.

Die Erfindung ist nachfolgend anhand eines in den Zeichnungen dargestellten Ausführungsbeispieles einer Wickelkassette für Glasfaserkabel näher erläutert. Es zeigen:
- Fig. 1: die Draufsicht auf die Wickelkassette
- Fig. 2: einen Querschnitt gemäß der Linie 11-11 in Fig. 1 durch die Wickelkassette
- Fig. 3: einen Querschnitt gemäß der Linie III-III in fig. 1 durch die Wickelkassette.

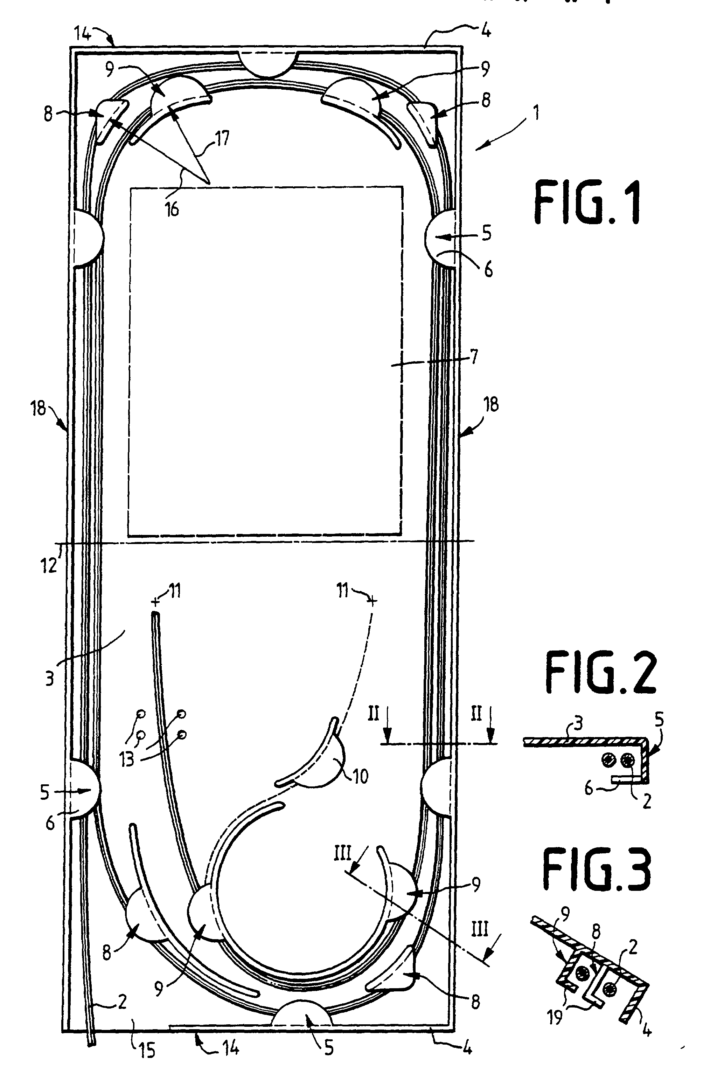

Die Wickelkassette 1 zur Aufnahme der Überlängen von Glasfaserkabeln 2 besteht aus einer Trägerplatte 3 mit einem diese allseitig umgebenden hochstehenden Rand 4, an dem Niederhalter 5 mit nach innen ragenden, im Abstand und parallel zur Trägerplatte 3 angeordneten halbkreisförmigen Halterippen 6 angeordnet sind. Im oberen Bereich der Wickelkassette 1 ist eine Spleißkassette 7 angeordnet, die den Raum etwas über die Mitte 12 der Wickelkassette 1 einnimmt. Im Bereich der Schmalseiten 14 sind auf der Trägerplatte 3 mehrere bogenförmige Führungselemente 8,9,10 in unterschiedlichen Abständen zum Rand 4 auf Kreisbögen unterschiedlicher Radien angeordnet. Die bogenförmigen Führungselemente 8,9,10 haben unterschiedliche Längen und sind - wie die Fig. 3 zeigt - mit radial auswärts vorstehenden Halterippen 19 versehen, die wie die in Fig. 2 dargestellten Halterippen 6 der Niederhalter 5 ausgebildet sind. Die einzelnen Führungselemente 8,9,10 bestehen aus einem auf der Trägerplatte 3 stehenden Steg, an welchem nicht dargestellte Stifte zur wahlweisen Befestigung in Bohrungen 13 der Trägerplatte 3 angeordnet sind, und von dem die Halterippen 19 ausgehen. Die Bohrungen 13 sind in einem beliebigen Raster in die Trägerplatte 3 eingebracht. Die Figur 1 zeigt nur beispielhaft einige der Bohrungen 13.

Ein Glasfaserkabel 2 wird gemäß der Figur 1 vom Eingang 15 eingeführt und unter den Halterippen 6 der Niederhalter 5 parallel zur Wand der linken Längsseite 18 bis zu den Führungselementen 8 im Bereich der oberen Schmalseite 14 der Wickelkassette 1 geführt. Von dort wird das Glasfaserkabel 2 an der rechten Wand der Längsseite 18 unter den Niederhaltern 5 bis zu den an der unteren Schmalseite 14 angeordneten Führungselementen 8 geführt und erneut unter den Niederhaltern 5 parallel zur Wand der linken Längsseite 18 bis zu den oberen, innen liegenden Führungselementen 9 und von dort unter den Niederhaltern 5 der Wand 4 in den Bereich der auf der Schmalseite 14 innen liegenden Führungselemente 9 geführt. Von dort kann das Glasfaserkabel 2 etwa von der Mitte 12 der Wickelkassette 1 aus in den links oder rechts angeordneten Eingang 11 der Spleißkassette 7 geführt werden. Während die um die Spleißkassette 7 herumgeführten Wickelnuten festgelegt sind, erlauben die variabel angeordneten Führungselemente 9,10 im Bereich der Spleißkassette 7 die Glasfaserkabel-Führung in verschiedenen Schlaufenformen. So ist auch eine Führung in z.B. Spiralform oder in Form einer Acht denkbar durch eine entsprechend gewählte Anordnung und die geometrische Ausformung der Führungselemente 8,9,10.

Die um die Spleißkassette 7 herumgeführten Wickelnuten verlaufen in genau definierten Schlaufen mit eigenen Wickelnuten, die durch die jeweils auf Kreisbögen unterschiedlicher Radien 16,17 angeordneten bogenförmigen Führungselemente 8,9 mit ihren radial auswärts stehenden Halterippen 19 gebildet sind. Unterhalb der am Rand 4 der Längsseiten 18 angeordneten Niederhalter 5 mit Halterippen 6 verlaufen die einzelnen Schlaufen des Glasfaserkabels 2 genau parallel zueinander. Ein Kreuzen der einzelnen Schlaufen des Glasfaserkabels 2 ist somit vermieden.

### BEZUGSZEICHENLISTE

- 1: Wickelkassette
- 2: Glasfaserkabel
- 3: Trägerplatte
- 4: Rand
- 5: Niederhalter
- 6: Halterippen
- 7: Spleißkassette
- 8: Führungselement
- 9: Führungselement
- 10: Führungselement
- 11: Eingang
- 12: Mitte
- 13: Bohrung
- 14: Schmalseite
- 15: Eingang
- 16,17: Radien
- 18: Längsseiten
- 19: Halterippen

## Patentansprüche

1. Wickelkassette (1) zur Aufnahme einer Spleißkassette (7) und einer Überlänge mindestens eines Kabels (2), insbesondere Glasfaserkabels, aus einer Trägerplatte (3) mit Führungselementen (8, 9,10),
**dadurch gekennzeichnet,**
**daß** an den Schmal- und Längsseiten (14,18) der Wickelkassette (1) Niederhalter (5) mit nach innen ragenden Halterippen (6) und daß mehrere bogenförmige Führungselemente (8,9,10) in unterschiedlichen Abständen zum zu den Schmalseiten (4) vorgesehen sind, wobei die Führungselemente (8,9) auf konzentrischen Kreisbögen unterschiedlicher Radien angeordnet sind und Halterippen (19) der Führungselemente (8,9) radial nach außen gerichtet sind, wobei ferner die Spleißkassette (7) zwischen den konzentrischen Führungselementen (8,9) derart angeordnet ist, daß das Kabel (2), insbesondere Glasfaserkabel, um die Spleißkassette (7) herumgeführt werden kann, wobei die Führungselemente (8,9) so positioniert sind, daß das Kabel (2), insbesondere Glasfaserkabel, so geführt, werden kann daß getrennte Verlegewege ohne Kreuzungsstellen entstehen, wobei das Kabel (2) in definierten Schlaufen mit eigenen Wickelnuten geführt wird.

2. Wickelkassette nach Anspruch 1 **dadurch gekennzeichnet, daß** die Führungselemente (8,9,10) entsprechend der gewünschten Kabelführung auf der Trägerplatte (3) steckbar geführt sind.

3. Wickelkassette nach Anspruch 1, **dadurch gekennzeichnet, daß** die Führungselemente (8,9,10) eine beliebige übereinander- oder nebeneinander angeordnete Führung des Kabels (2) erlauben, wie z.B. eine mäanderförmige, spiralförmige, schlaufenförmige, konzentrische Führung.

4. Verfahren zum Einbringen der Überlängen von Kabeln, insbesondere Glasfaserkabeln, in eine Wickelkassette mit Führungselementen gemaß Auspruch 1,
**dadurch gekennzeichnet,**
**daß** Führungselemente (8,9,10) unterschiedlicher Geometrie in der Wikkelkassette so positioniert werden, daß für die Kabel getrennte Verlegewege ohne Kreuzungsstellen entstehen, wobei die bogenförmigen Führungselemente (8,9) auf konzentrischen Kreisen unterschiedlicher Radien (16,17) angeordnet sind und die Kabel in definierten Schlaufen mit eigenen Wickelnuten geführt werden, wobei ferner die Spleißkassette (7) zwischen den konzentrischen Führungselementen (8,9) angeordnet ist, so daß das Kabel (2), insbesondere Glasfaserkabel, um die Spleißkassette (7) herumgeführt werden kann.

5. Verfahren nach Anspruch 4.
**dadurch gekennzeichnet,**
**daß** in der Wickeikassette (1) an Stellen, an denen auf das Kabel Kräfte zum Kassetteninneren hin wirken, räumlich voneinander getrennte Führungselemente (8,9) für getrennte Verlegewege der Kabel und an Stellen, an denen auf das Kabel nach außen gerichtete Kräfte wirken, gemeinsame Führungselemente (5,6) für einen gemeinsamen, parallelen Verlegeweg der Kabel positioniert werden.

## Claims

1. Winding cassette (1) for receiving a splice organizer (7) and an excess length of at least one cable (2), in particular an optical-fibre cable, comprising a support plate (3) with guide elements (8, 9, 10), **characterized in that** hold-down devices (5) with inwardly protruding holding ribs (6) are provided on the narrow and longitudinal sides (14, 18) of the winding cassette (1) and **in that** a plurality of arcuate guide elements (8, 9, 10) are provided at different distances from the narrow sides (4), the guide elements (8, 9) being arranged on concentric arcs of different radii and holding ribs (19) of the guide elements (8, 9) being directed radially outwards, the splice organizer (7) also being arranged between the concentric guide elements (8, 9) in such a way that the cable (2), in particular an optical-fibre cable, can be led around the splice organizer (7), the guide elements (8, 9) being positioned in such a way that the cable (2), in particular an optical-fibre cable, can be routed in such a way that separate laying paths without crossing points are produced, the cable (2) being routed in defined loops with their own winding grooves.

2. Winding cassette according to Claim 1, **characterized in that** the guide elements (8, 9, 10) are disposed such that they can be fitted on the support plate (3) in a way corresponding to the desired cable routing.

3. Winding cassette according to Claim 1, **characterized in that** the guide elements (8, 9, 10) allow any desired routing of the cable (2), arranged in a superjacent or adjacent manner, such as for example a meandering, spiralling, looping or concentric routing.

4. Method of introducing excess lengths of cables, in particular optical-fibre cables, into a winding cassette with guide elements according to Claim 1, **characterized in that** guide elements (8, 9, 10) of different geometry are positioned in the winding cassette in such a way that separate laying paths or crossing points are produced for the cables, the arcuate guide elements (8, 9) being arranged on concentric circles of different radii (16, 17) and the cables being routed in defined loops with their own winding grooves, the splice organizer (7) also being arranged between the concentric guide elements (8, 9), so that the cable (2), in particular an optical-fibre cable, can be led around the splice organizer (7).

5. Method according to Claim 4, **characterized in that** spatially separate guide elements (8, 9) for separate laying paths of the cables are positioned in the winding cassette (1) at points at which forces act on the cable towards the interior of the cassette and common guide elements (5, 6) for a common, parallel laying path of the cables are positioned in the winding cassette (1) at points at which outwardly directed forces act on the cable.

## Revendications

1. Cassette d'enroulement (1) destinée à recevoir une cassette à épisser (7) et une surlongueur d'au moins un câble (2), en particulier d'un câble de fibres de verre, composée d'une plaque de support (3) avec des éléments de guidage (8, 9, 10), **caractérisée en ce qu'**il est prévu, sur les côtés étroits et les côtés longs (14, 18) de la cassette d'enroulement (1), des onglets de maintien (5) avec des nervures de maintien (6) dirigées vers l'intérieur et plusieurs éléments de guidage en forme d'arc (8, 9, 10) à différentes distances des côtés étroits (4), dans laquelle les éléments de guidage (8, 9) sont disposés sur des arcs de cercle concentriques de rayons différents et des nervures de maintien (19) des éléments de guidage (8, 9) sont dirigées radialement vers l'extérieur, dans laquelle en outre la cassette à épisser (7) est disposée entre les éléments de guidage concentriques (8, 9), de manière telle que le câble (2), en particulier le câble de fibres de verre, puisse être enroulé autour de la cassette à épisser (7), dans laquelle les éléments de guidage (8, 9) sont positionnés de manière telle que le câble (2), en particulier le câble de fibres de verre, puisse être guidé de manière telle qu'il se forme des chemins de pose séparés sans points de croisement, dans lesquels le câble (2) est guidé en boucles définies avec leurs propres rainures d'enroulement.

2. Cassette d'enroulement suivant la revendication 1, **caractérisée en ce que** les éléments de guidage (8, 9, 10) sont guidés de façon enfichable sur la plaque de support (3) conformément au guidage désiré du câble.

3. Cassette d'enroulement suivant la revendication 1, **caractérisée en ce que** les éléments de guidage (8, 9, 10) permettent un guidage du câble (2) disposé à volonté l'un au-dessus de l'autre ou l'un à côté de l'autre, comme par exemple un guidage sinueux, en forme de spirale, en forme de boucles, ou concentrique.

4. Procédé pour l'insertion de surlongueurs de câbles, en particulier de câbles de fibres de verre, dans une cassette d'enroulement avec des éléments de guidage suivant la revendication 1, **caractérisé en ce que** des éléments de guidage (8, 9, 10) de formes géométriques différentes sont positionnés dans la cassette d'enroulement de manière telle qu'il se forme pour les câbles des chemins de pose séparés sans points de croisement, dans lequel les éléments de guidage en forme d'arc (8, 9) sont disposés sur des cercles concentriques de rayons différents (16, 17) et les câbles sont guidés en boucles définies avec des rainures de guidage propres, dans lequel en outre la cassette à épisser (7) est disposée entre les éléments de guidage concentriques (8, 9) de manière telle que le câble (2), en particulier le câble de fibres de verre, puisse être enroulé autour de la cassette à épisser (7).

5. Procédé suivant la revendication 4, **caractérisé en ce que**, dans la cassette d'enroulement (1), des éléments de guidage (8, 9) spatialement séparés les uns des autres sont positionnés à des endroits où des forces agissent sur le câble en direction de l'intérieur de la cassette pour former des chemins de pose séparés pour les câbles, et des éléments de guidage communs (5, 6) sont positionnés à des endroits où des forces dirigées vers l'extérieur agissent sur le câble, pour former un chemin de pose commun, parallèle, pour les câbles.
